# EUROPEAN PATENT SPECIFICATION

(11) **EP 1 372 995 B1**
(45) Date of publication and mention of the grant of the patent: **27.09.2006**
(21) Application number: 02718332.6
(22) Date of filing: 05.04.2002
(51) Int. Cl.: B60H 1/00

(54) **VEHICLE THERMAL MANAGEMENT SYSTEMS**
FAHRZEUG-WÄRMEMANAGEMENTSYSTEME
SYSTEMES DE GESTION THERMIQUE DE VEHICULE

(30) Priority: 07.04.2001 GB 0108785
(43) Date of publication of application: 02.01.2004
(73) Proprietor: Calsonic Kansei UK Limited, Llanelli, Carmarthenshire SA14 8HU (GB)
(72) Inventor: JACKSON, Adrian, Swansea SA3 5TT (GB)
(74) Representative: Davies, Gregory Mark
(86) International application number: PCT/GB2002/001616
(87) International publication number: WO 2002/081240

(56) References cited:
- EP-A- 0 800 940
- EP-A- 0 945 290
- DE-A- 4 341 756
- DE-C- 19 813 674

## Description

The present invention relates to vehicle thermal management systems and in particular to such systems including a refrigerant circuit system (typically a climate control refrigeration system).

Modern vehicles operate with improved engine efficiency. As a consequence, the amount of heat energy dissipated into the engine coolant circuit has reduced. This energy was traditionally relied upon to provide a heat source for the interior of the automobile, thereby facilitating in-vehicle comfort and safety. A market trend in response to this heat energy reduction is observed in the increased uptake of supplementary and auxiliary heat sources within modern vehicles. With the increased sophistication and technology of the modern automobile, this trend is further supported: heightened consumer expectation demands improved interior vehicle warm-up and windscreen defogging/deicing during winter driving conditions.

One conventional technique to improve cabin warm-up is to recirculate the cabin air. This method however, does have the limitation of increasing in-vehicle air humidity, thereby promoting misted windscreen conditions. Other warm-up solutions have mainly concentrated upon introducing additional heat sources, either directly into the cabin airflow (e.g. electric heating elements), or indirectly into the engine coolant flow (e.g. fuel burning heater).

A more technically sophisticated solution is embodied in the heat pump system. A heat pump, or reversed air conditioning system, can allow reject heat from an in-cabin condenser to supplement cabin air heating. Disadvantages of a simple reversal system include lack of dehumidification, and potential for the air-side heat exchanger acting as the evaporator to freeze in low ambient temperature conditions.

Proposals to address such disadvantages have suggested the use of a third heat exchanger in-cabin within the air conditioning system, which only acts as a refrigerant condenser. The evaporator retains its function and the third heat exchanger becomes the active condenser, whilst the primary condenser (at the front of the vehicle engine bay) is isolated from the circuit. The purpose of the arrangement is to utilise the heat from the condenser in addition to the heat available from the conventional heater core. Dehumidifying is achieved with this system via air passage over the evaporator.

DE 43 41 756 A discloses a vehicle thermal management system according to the preamble of claim 1.

An improved system has now been devised.

The invention provides a vehicle thermal management system comprising the features of claim 1.

The first heat exchanger means preferably comprises a condenser for the refrigerant, typically configured to effect condensation of relatively high temperature, high pressure refrigerant.

The system preferably includes bypass means permitting the refrigerant to bypass the first heat exchanger means.

Beneficially, the further heat exchanger means is arranged to transfer heat between the vehicle exhaust emission system and the refrigerant circuit system.

Preferably, the vehicle thermal management system comprises
exchange between the emission exhaust system and the refrigerant circuit system
an evaporator for the refrigerant in the refrigerant circuit system. The evaporator acts as an evaporator for relatively low temperature, low pressure refrigerant.

Preferred system features are recited in the appended claims and apparent from the following description relating to an exemplary embodiment described by way of example only, and with reference to the accompanying drawings, in which:

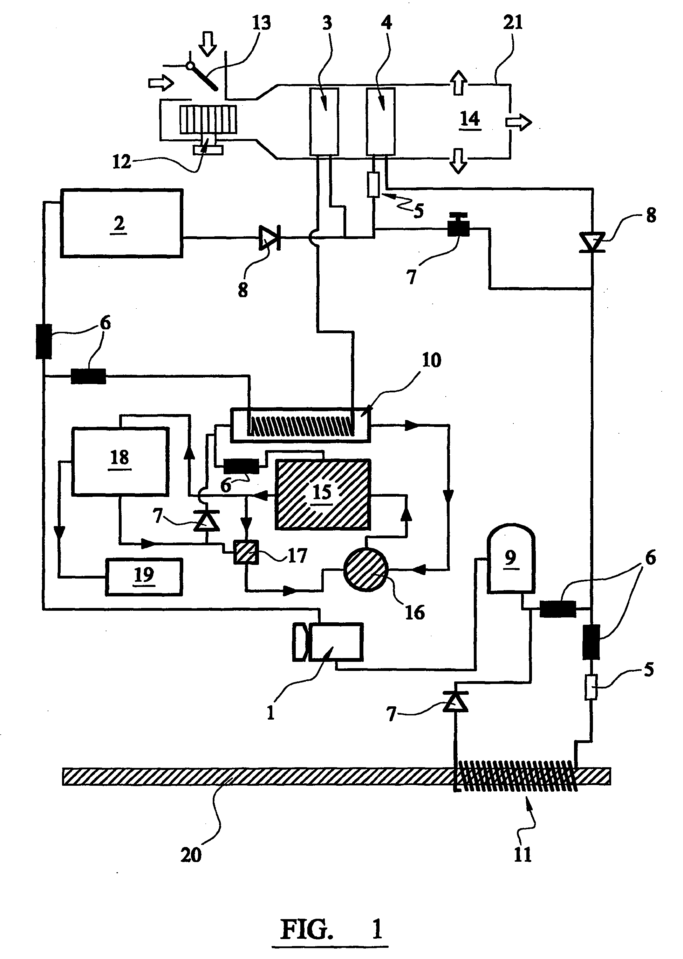

Figure 1 is a schematic representation of an exemplary system in accordance with the invention;
Figure 2 is a view of the system in operation in very cold (sub-zero) ambient temperatures;
Figure 3 is a view of the system in operation in cold ambient temperatures;
Figure 4 is a view of the system in operation in comfortable ambient temperatures;
Figure 5 is a view of the system in operation in warm ambient temperatures;
Figure 6 is a view of the system in operation in hot ambient temperatures;
The invention system illustrated in Figure 1 represents a preferred embodiment for a vehicle thermal management system.

The system is designed to exchange heat energy between the air conditioning circuit, the engine cooling circuit, the engine exhaust circuit, and the ambient airflows. It consists of the main components as follows:

Compressor (1) is the refrigerant pump of the system and acts to compresses the refrigerant vapour to high pressure and temperature to facilitate condensation in a condenser.

Primary Condenser (2) is located at the front of the vehicle bay, behind the grill. This component is common with, and performs identical function to current vehicle air-conditioning condensers.

A secondary Condenser (3) is located 'in-cabin' within air conditioning airflow enclosure (21), to provide a heat source that can be used to heat air prior to distribution into the interior vehicle space. This condenser (3) gives up heat to the air stream, whilst the evaporator component (4) in turn removes a fraction of this extra heat from the air stream during dehumidification, before exit into the cabin space. This cycle facilitates dehumidification and heating at low ambient temperature conditions, whilst reducing the risk of freezing on the surface of evaporator (4).

Evaporator (4) evaporates low pressure refrigerant, the heat of vaporisation being taken from the air passing across this component. Evaporator (4) cools the air passing across it, and this cooling encourages precipitation of moisture from the cooled air. It therefore performs a dehumidifying function, in addition to cooling.

Orifice Tube (5) performs irreversible, adiabatic expansion of condensed liquid into low pressure liquid ready for evaporation in evaporator component (4) and/or (11). In the more sophisticated orifice tube designs, the orifice size can be varied to increase system flexibility in response to refrigeration demand fluctuation.

The system includes a variety of valves to be operated to control fluid flow according to system demand requirements. Solenoid valves (6) are controlled, via an electrical signal, between their two conditions of either fully open or fully closed. They therefore control fluid flow within the circuits, effectively redirecting flow pathways within the system.

Variable Valves (7) belong to a generic family of valve devices wherein the amount of flow through itself is controlled by the amount of valve free-flow area. Additionally, this free-flow area is responsive to an external signal, ideally varying between 0 and 100%.

One-Way Valves (8) allow fluid flow through themselves in the one direction only (as indicated, only in the direction of the arrowhead graphic).

Accumulator (9) performs four functions. It acts as a reservoir for refrigerant that accommodates variation in demand from the circuit, it separates condensed liquid from vapour to ensure only vapour passes to the compressor (1), and employs a molecular sieve to remove any moisture from the circulating refrigerant, and entrap any particulate impurity.

Sub-Condenser (10) comprises a heat exchanger designed to exchange heat between the refrigerant circuit and the engine cooling circuit. It may be described as a sub-condenser in reference to its function to facilitate the condensation of high temperature, high pressure vaporised refrigerant. The heat dissipated from the refrigerant during this condensation will be transferred to the engine cooling circuit, and can be used to warm the engine (15) or be dissipated in turn by the radiator (18), depending upon the systems operational mode.

Sub-Evaporator (11) comprises a heat exchanger designed to exchange heat between the refrigerant circuit and the engine exhaust circuit. It may be described here as a sub-evaporator in reference to its function to facilitate the evaporation of low temperature, low pressure liquid refrigerant. The heat required by the liquid refrigerant to achieve evaporation will be transferred from the hot engine exhaust gas, when this component (11) is operational (i.e. has a refrigerant flow through itself).

A blower and Motor (12) draws air into the distribution and conditioning system, and drives the air through the system into the vehicle interior cabin via ducts and vents (14).

Air inlet flow diverter 13 operates to either intake fresh-air from outside the vehicle, or to effect recirculating air-intake from inside the vehicle (or a proportion from each). The respective proportions of each are determined by the position of the diverter flap (13). The subsequent mixing and distribution of the airflow after passage across and through the heat exchangers (3,4) and any by-pass apertures is illustrated as a schematic function by the arrows labelled (14). Various modes representing combinations of air distribution to the windscreen, face, foot or near vents could be accommodated, as required by the particular vehicle specification.

Water pump (16) functions within the engine cooling circuit, circulating fluid through all components within the circuit under the influence of a created fluid pressure difference. The components in the engine coolant (water) circuit include a thermostat (17), radiator (18), and expansion tank (19). Thermostat (17) is generally responsive to engine cooling fluid temperature, and controls flow through the front radiator component (18) and the radiator by-pass circuit. Radiator(18) facilitates heat transfer to the air passing across it. Ambient air is directed into the engine bay via grills and vents and allowed to pass across this component, thereby taking heat from the hot engine cooling fluid flowing within radiator (18), and consequently cooling this circuit fluid.

Expansion tank (19) acts as a fluid reservoir for the engine cooling circuit, thereby facilitating fluctuating fluid volume demands within the circuit as a consequence of variation in operating condition.

Exhaust System (20) comprises pipework carrying the hot exhaust gas from the engine (15) and out to atmosphere. Typically, the Sub-Evaporator (11) will be connected around this exhaust system at some point downstream of any particulate or catalytic treatment area, to utilise the waste heat of the spent exhaust gases.

The cabin air conditioning and distribution system (21) comprises components 3, 4, 12, 13 and 14, assembled into housings which are shaped to enable vehicle fit and required airflow function.

The following modes of operation for the proposed system describe its beneficial designs:

### MODE 1 - Operation During Ambient Temperatures of Severe Cold and Sub-Zero

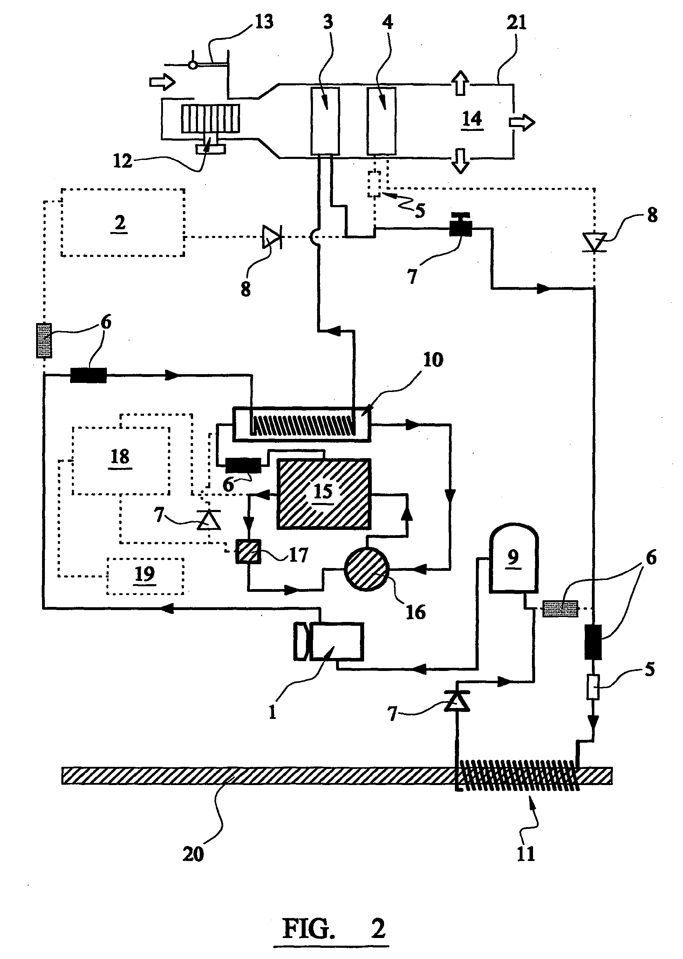

(Figure 2 reflects operation of this system under those conditions described below).

During extreme cold conditions, the principle requirement for the vehicle operator would be to heat the in-cabin environment. However, from an engine emissions standpoint, the greatest benefit would be to heat the engine, thereby improving mechanical efficiencies and lowering exhaust emissions. We therefore have two requirements for the system.

It is envisioned that the vehicle heating cycle could use the following sequence. Once the engine is started, an automatic delay might operate before the refrigeration cycle will start. This pre-determined time corresponding to the ambient temperature, possibly delaying the activation of the compressor (1) if the ambient temperatures are too severe. Once the compressor (1) can activate, it will start to circulate the refrigerant at the minimum flow rate setting. From sensing the external temperature levels to be below a determined lower limit, the air-intake (13) could adjust to facilitate complete air recirculation; external air would not be allowed access inside the in-cabin system. Air drawn from inside the vehicle, through action of the blower unit (12), would be directed across the Secondary Condenser (3) and Evaporator (4). High pressure/temperature refrigerant vapour would be directed, under the action of compressor (1) and valves (6), through the Sub-Condenser (10) and onto the Secondary Condenser (3). Upon entering these condensers, the refrigerant vapour is encouraged to condense via heat exchange, with either or both the engine cooling fluid flow through unit (10) and airflow across unit (3), and thereby release its latent heat of condensation. This heat will raise the temperatures of either or both the engine cooling fluid (and consequently the engine itself) and the airflow into the cabin. The relative split of heat fraction to the air and engine circuit can be controlled through judicious control of valve (6) in the engine cooling circuit, and the airflow speed of blower (12).

Upon exit from unit 3, refrigerant liquid (and any residual vapour) would be directed, under the influence of valves (6) and (7) toward the orifice tube (5), located prior to Sub-Evaporator (11) inlet. This orifice (5) facilitates irreversible, adiabatic expansion of condensed liquid into low pressure liquid ready for evaporation within component (11). Upon entry into the Sub-Evaporator (11), the refrigerant liquid is encouraged to evaporate via heat exchange with the exhaust gas flowing within component (2), thereby drawing the latent heat for vaporisation from this waste-gas flowstream. Upon exit from (11), refrigerant vapour (including any residual liquid) would be directed into accumulator (9). Within component (9), the refrigerant is filtered, desiccated, stored and separated from any residual liquid fraction. This action ensures only low pressure vapour is drawn from component (9) to enter the compressor component (1), thereby completing the cycle.

If any dehumidification of cabin airflow is required during this operational cycle, valve (7) could partially close and facilitate a bleed of refrigerant through Evaporator (4) via orifice tube (5). Evaporation of refrigerant within component (4) would consequently cool the cabin air, thereby reducing its moisture content. Alternatively, flap (13) could allow ambient airflow (with its lower moisture fraction) to mix with the recirculated airflow and thereby reduce humidity. Obviously, these separate actions could occur in parallel, depending upon what method offered the best control strategy.

### MODE 2 - Operation During Cold Ambient Temperatures Above Freezing

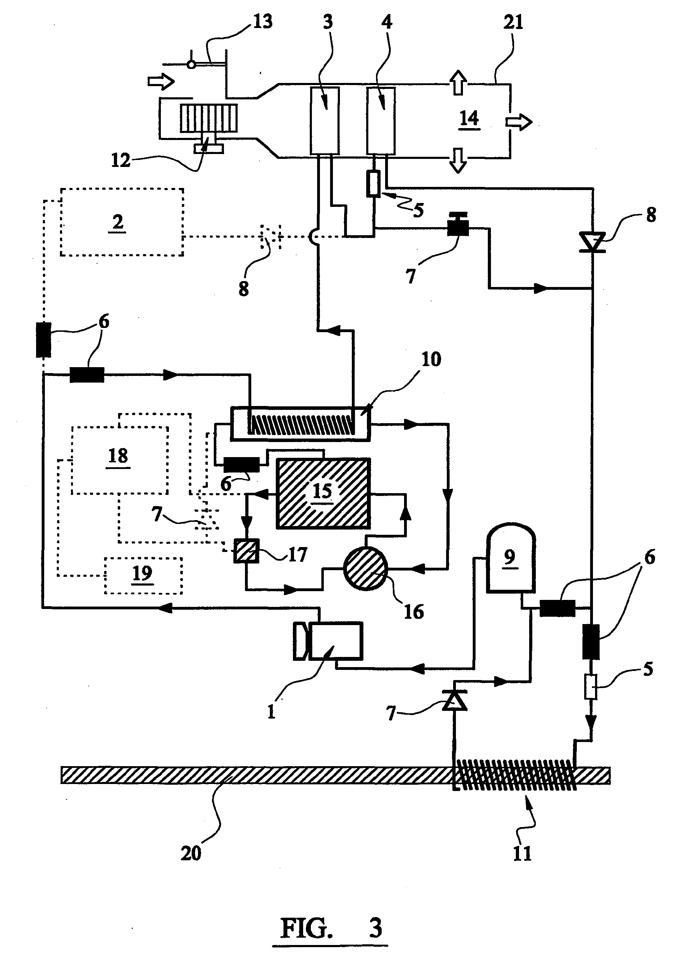

(Figure 3 illustrates the potential circuits that could be activated under such conditions).

Again, the principle requirements would be to heat the in-cabin environment, and to minimise exhaust emissions. Operational functions and circuits would be identical to that for MODE 1 above, and are consequently not repeated here. The only major difference in this mode is the expectation that the recirculated air versus fresh air ratios for intake mixtures will reach fractions representing increased fresh air proportion at shortened timescales.

When ambient temperature are cool, only small levels of heating might be required in-vehicle. Under such conditions, air drawn from outside the vehicle, through action of the blower unit 12, would be directed, across the Secondary Condenser (3) and Evaporator (4). By judicious control of the heat transfer duty across/within the Secondary Condenser (3), Evaporator (4), Sub-Condenser (10) and Sub-Evaporator (11), in conjunction with the intake-to-recirculated air mix (diverter 13), conditioned air into the cabin can be facilitated, for both temperature and humidity.

### MODE 3 - Operation During Comfortable Ambient Temperatures

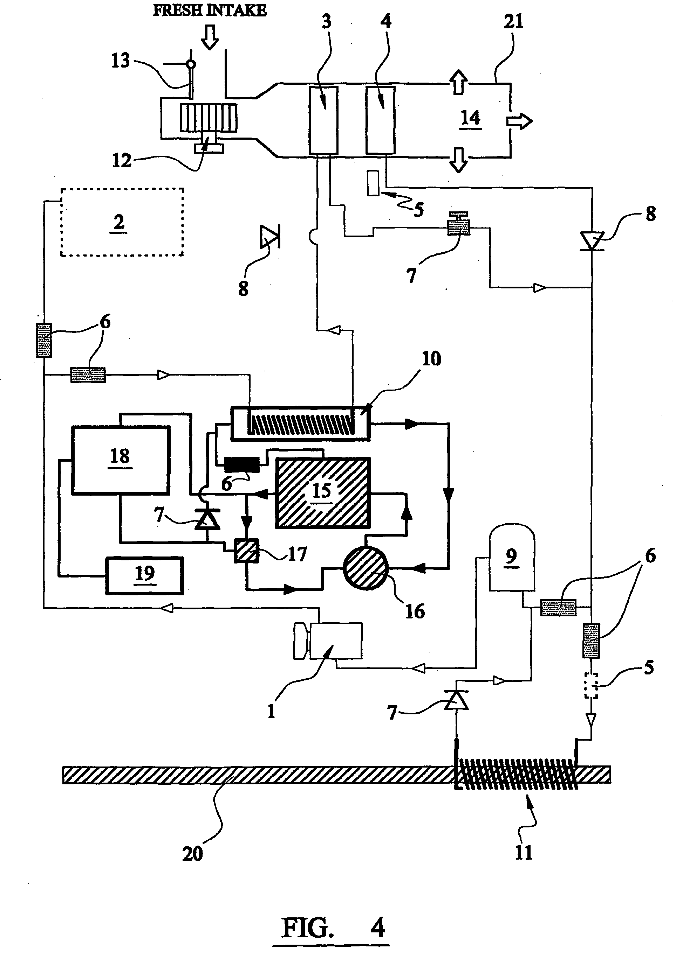

(Figure 4 illustrates such operation).

During such mild conditions, the requirement might be for fresh air only to be allowed ingress into the cabin. In such a mode, both the Secondary Condenser (3) and Evaporator (4) will be inoperable, and possibly by-passed with respect to the airflow.

Air drawn from outside the vehicle, through action of the blower unit 12, and is either directed across or around heat exchanger (3) and (4). Minimal heat exchange should take place during passage across components (3) and (4), because the refrigeration circuit would be non-operational. Unconditioned air would then be directed to the mixing and distribution section 14, and subsequently into the car interior airspace via ducts and vents.

### MODE 4 - Operation of Air-Conditioning During Warm,Ambient Temperatures

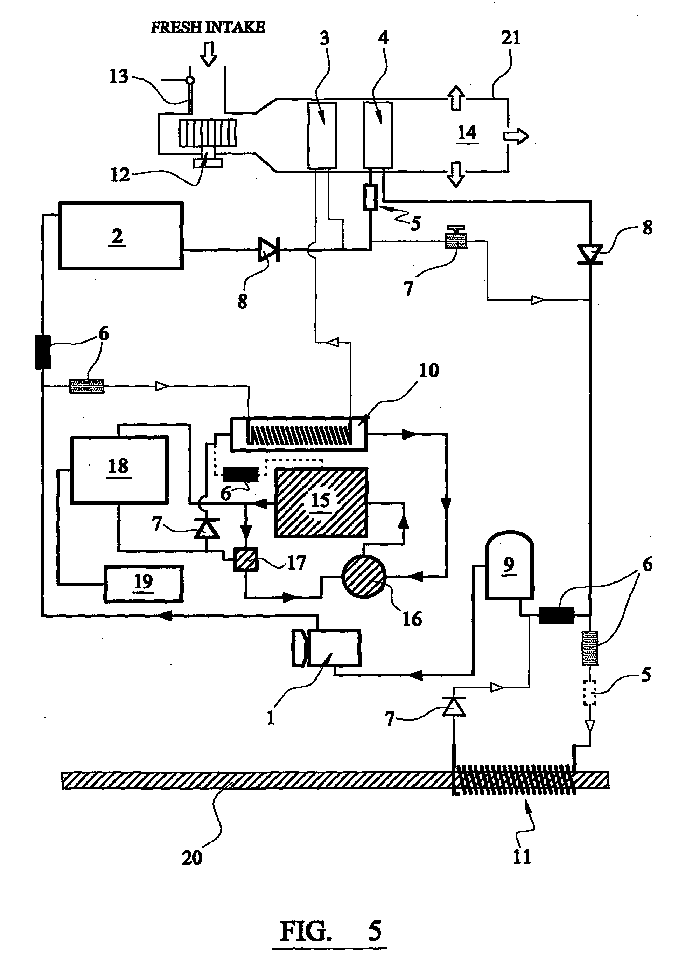

(This operational mode is illustrated in Figure 5).

During such warm conditions, the requirement might be for fresh air to be allowed ingress into the cabin at a specific temperature. Air drawn from outside the vehicle, through action of the blower unit (12), would be directed across, or around if by-passed, the Secondary Condenser (3), and onto the Evaporator (4). This could achieve a set air temperature condition prior to distribution into the vehicle interior.

In this mode, the conventional refrigeration cycle would operate. Compressor (1) can engage, and high pressure/temperature refrigerant vapour be directed, under the influence of valves (6) to the Primary Condenser (2). Upon entering the primary condenser (2), the refrigerant vapour is encouraged to condense via heat exchange with the underbonnet airflow across unit (2), thereby releasing the latent heat of condensation to the underbonnet air-stream and raising its temperature. Upon exit from unit (2), refrigerant liquid (and any residual vapour) travels toward the orifice valve component (5). (The circuit loop containing the Secondary Condenser (3) and Sub-Condenser (10) is rendered redundant by the action of valves (6).) The orifice valve (5) facilitates irreversible, adiabatic expansion of condensed liquid into low pressure liquid ready for evaporation in component (4). To avoid flow bypassing Evaporator (4), the variable control valve (7) should be fully closed. Upon entry into the evaporator, the refrigerant liquid is encouraged to evaporate (within the evaporator unit) via heat exchange with the airflow across unit (4) (outside the evaporator unit), thereby drawing the latent heat for vaporisation from the air-stream and lowering its temperature. Upon exit from unit (4), refrigerant vapour travels back to the compressor (1), via Accumulator (9) to separate any remaining liquid fraction from the evaporated refrigerant. The action of valves (6) also avoid flow to the Sub-Evaporator (11).

Returning consideration to the air stream, fresh air is allowed passage across (or around) an inoperable component (3). This air then impacts upon the operational evaporator unit (4). Heat exchange takes place across component (4), resulting in the consequent lowering of the air temperature to the required temperature level. Additionally, dehumidification is encouraged because the vapour solubility for moisture is reduced with reducing temperature; moisture from the air stream is encouraged to condense upon the colder surface of component (4). Conditioned air with reduced humidity exits from component (4) and is directed to the mixing and distribution section 14, and subsequently into the car interior airspace via ducts and vents.

### MODE 5 - Operation of Air-Conditioning During Hot Ambient Temperatures

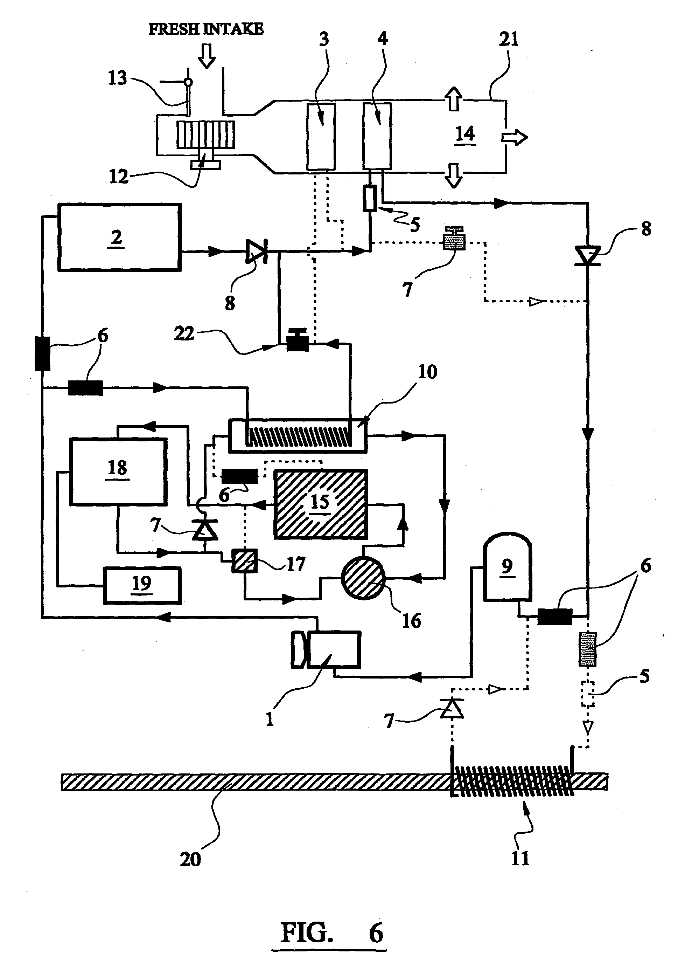

(This operational mode is illustrated in Figure 6).

During hot conditions, the requirement would be for cooled, fresh air to be allowed ingress into the cabin at a specific temperature. Air drawn from outside the vehicle, through action of the blower unit (12), would be directed across, or around if by-passed, the Secondary Condenser (3), and onto the Evaporator (4). The cooling effect of Evaporator (4) could achieve a set air temperature condition prior to distribution into the vehicle interior.

In this mode, the conventional refrigeration cycle would operate. Compressor (1) can engage, and high pressure/temperature refrigerant vapour be directed, under the influence of valves (6) to the Primary Condenser (2) . Upon entering the primary condenser (2), the refrigerant vapour is encouraged to condense via heat exchange with the underbonnet airflow across unit (2), thereby releasing the latent heat of condensation to the underbonnet air-stream and raising its temperature. Upon exit from unit (2), refrigerant liquid (and any residual vapour) travels toward the orifice valve component (5). (The circuit loop containing the Secondary Condenser (3) and Sub-Condenser (1) is rendered redundant by the action of valves (6).) The orifice valve (5) facilitates irreversible, adiabatic expansion of condensed liquid into low pressure liquid ready for evaporation in component (4). To avoid flow bypassing Evaporator (4), the variable control valve (7) should be fully closed. Upon entry into the evaporator, the refrigerant liquid is encouraged to evaporate (within the evaporator unit) via heat exchange with the airflow across unit (4) (outside the evaporator unit), thereby drawing the latent heat for vaporisation from the air-stream and lowering its temperature. Upon exit from unit (4), refrigerant vapour travels back to the compressor (1), via Accumulator (9) to separate any remaining liquid fraction from the evaporated refrigerant. The action of valves (6) also avoid flow to the Sub-Evaporator (11).

Returning consideration to the air stream, fresh air is allowed passage across (or around) an inoperable component (3). This air then impacts upon the operational evaporator unit (4). Heat exchange takes place across component (4), resulting in the consequent lowering of the air temperature to the required temperature level. Additionally, dehumidification is encouraged because the vapour solubility for moisture is reduced with reducing temperature; moisture from the air stream is encouraged to condense upon the colder surface of component (4). Conditioned air with reduced humidity exits from component (4) and is directed to the mixing and distribution section 14, and subsequently into the car interior airspace via ducts and vents.

An additional functionality can be achieved by allowing at least part of the thermal duty of refrigerant condensation to be dissipated into the engine cooling circuit via the Sub-Condenser (10) . As Figure 6 illustrates, this could be achieved utilising a simple by-pass and valve (22) to split refrigerant flow through the Sub-Condenser (10) and Primary Condenser (2). (Under operational Modes 1 to 4 previously, this by-pass flow could be avoided through the closing action of valve 22.) This by-pass flow could have potential benefit for improving cabin-cooling under vehicle-idling conditions. With reduced (minimum) airflow through the condenser, additional heat dissipation can be delegated to the engine cooling circuit via heat exchanger in the Sub-Condenser (10). This will obviously require algorithmic control, to ensure that additional cooling duties demanded from the engine cooling circuit do not exceed the capability of the circuit.

This operational mode is illustrated in Figure 6.

## Claims

1. A vehicle thermal management system comprising:
(i) a refrigerant circuit system;
(ii) an engine coolant circuit for engine thermal management; and
(iii) first heat exchanger means (10) for heat exchange between the refrigerant and the engine coolant;
**characterised in that**
a further heat exchanger means (11) is arranged to transfer heat between a vehicle system other than the engine coolant circuit and the refrigerant circuit system.

2. A vehicle thermal management system according to claim 1, wherein the first heat exchanger means comprises a condenser for the refrigerant.

3. A vehicle thermal management system according to any preceding claim, including bypass means arranged to cause the refrigerant to bypass the first heat exchanger means.

4. A vehicle thermal management system according to any preceding claim, wherein the system includes a refrigerant condenser (3) in the climate control airflow path of the system.

5. A vehicle thermal management system according to claim 4, wherein the refrigerant condenser (3) in the climate control airflow path is downstream in the refrigerant circuit of the first heat exchanger means.

6. A vehicle thermal management system according to any preceding claim including a primary refrigerant condenser (2) disposed outside the climate control airflow path of the system.

7. A vehicle thermal management system according to claim 6, configured to permit switching or metering of refrigerant between the first heat exchanger (10) and the primary condenser (2).

8. A vehicle thermal management system according to any preceding claim including a refrigerant evaporator (4) in the climate control airflow path of the system.

9. A vehicle thermal management system according to claim 8 in combination with claim 4 or 5, wherein the refrigerant evaporator (4) is downstream of the refrigerant condenser (3) provided in the climate control airflow path.

10. A vehicle thermal management system according to any preceding claim, wherein the further heat exchanger means (11) is arranged to transfer heat between the vehicle exhaust emission system and the refrigerant circuit system.

## Patentansprüche

1. Wärmemanagementsystem eines Fahrzeuges mit
(i) einem Kältemittelkreislaufsystem,
(ii) einem Motorkühlkreislauf für das Wärmemanagement des Motors
(iii) und einer ersten Wärmetauscheranordnung (10) zum Wärmeaustausch zwischen dem Kältemittel und dem Motorkühlmittel,
**dadurch gekennzeichnet,**
**dass** eine weitere Wärmetauscheranordnung (11) vorgesehen ist, um Wärme zwischen einem Fahrzeugsystem, das nicht der Motorkühlkreislauf ist, und dem Kältekreislaufsystem auszutauschen.

2. Wärmemanagementsystem eines Fahrzeuges nach Anspruch 1, **dadurch gekennzeichnet, dass** die erste Wärmetauscheranordnung einen Kondensator für das Kältemittel aufweist.

3. Wärmemanagementsystem eines Fahrzeuges nach einem oder mehreren der vorhergehenden Ansprüche, **dadurch gekennzeichnet, dass** ein Bypass-Mittel vorgesehen ist, das dazu dient, dass das Kältemittel den ersten Wärmetauscher umgeht.

4. Wärmemanagementsystem eines Fahrzeuges nach einem oder mehreren der vorhergehenden Ansprüche, **dadurch gekennzeichnet, dass** das System im Klimaregelungs-Luftkanal des Systems einen Kältemittelkondensator (3) aufweist.

5. Wärmemanagementsystem eines Fahrzeuges nach Anspruch 4, **dadurch gekennzeichnet, dass** der Kältemittelkondensator (3) im Klimaregelungs-Luftkanal stromabwärts im Kältemittelkreislauf der ersten Wärmetauscheranordnung angeordnet ist.

6. Wärmemanagementsystem eines Fahrzeuges nach einem oder mehreren der vorhergehenden Ansprüche, **dadurch gekennzeichnet, dass** außerhalb des Klimaregelungs-Luftkanals des Systems ein Hauptkältemittelkondensator (2) angeordnet ist.

7. Wärmemanagementsystem eines Fahrzeuges nach Anspruch 6, **dadurch gekennzeichnet, dass** es so ausgebildet ist, dass es das Schalten oder Dosieren des Kältemittels zwischen dem ersten Wärmetauscher (10) und dem Hauptkondensator (2) ermöglicht.

8. Wärmemanagementsystem eines Fahrzeuges nach einem oder mehreren der vorhergehenden Ansprüche, **dadurch gekennzeichnet, dass** im Klimaregelungs-Luftkanal des Systems ein Kältemittelverdampfer (4) vorgesehen ist.

9. Wärmemanagementsystem eines Fahrzeuges nach Anspruch 8 in Kombination mit Anspruch 4 oder 5, **dadurch gekennzeichnet, dass** der Kältemittelverdampfer (4) stromabwärts des im Klimaregelungs-Luftkanal angeordneten Kältemittelkondensators (3) vorgesehen ist.

10. Wärmemanagementsystem eines Fahrzeuges nach einem oder mehreren der vorhergehenden Ansprüche, **dadurch gekennzeichnet, dass** die weitere Wärmetauscheranordnung (11) zur Übertragung von Wärme zwischen dem Auspuffsystem des Fahrzeuges und dem Kältemittelkreislaufsystem ausgebildet ist.

## Revendications

1. Système de gestion thermique d'un véhicule, comprenant :
(i) un système de circuit de réfrigérant ;
(ii) un circuit de liquide de refroidissement du moteur pour la gestion thermique du moteur ; et
(iii) un premier moyen échangeur de chaleur (10) permettant d'échanger la chaleur entre le réfrigérant et le liquide de refroidissement du moteur ; **caractérisé en ce que** un moyen échangeur de chaleur additionnel (11) est agencé pour transférer de la chaleur entre un système du véhicule, autre que le circuit de liquide de refroidissement du moteur, et le système de circuit de réfrigérant.

2. Système de gestion thermique d'un véhicule selon la revendication 1, dans lequel le premier moyen échangeur de chaleur comprend un condenseur pour le réfrigérant.

3. Système de gestion thermique d'un véhicule selon l'une quelconque des revendications précédentes, comprenant un moyen de dérivation agencé pour provoquer la dérivation du premier moyen échangeur de chaleur par le réfrigérant.

4. Système de gestion thermique d'un véhicule selon l'une quelconque des revendications précédentes, dans lequel le système inclut un condenseur de réfrigérant (3) sur le trajet de l'écoulement d'air du conditionnement d'air du système.

5. Système de gestion thermique d'un véhicule selon la revendication 4, dans lequel le condenseur de réfrigérant (3) prévu sur le trajet de l'écoulement d'air du conditionnement d'air se trouve en aval dans le circuit réfrigérant du premier moyen échangeur de chaleur.

6. Système de gestion thermique d'un véhicule selon l'une quelconque des revendications précédentes, incluant un condenseur de réfrigérant principal (2) disposé à l'extérieur du trajet de l'écoulement d'air du conditionnement d'air du système.

7. Système de gestion thermique d'un véhicule selon la revendication 6, configuré pour permettre la commutation ou le mesurage du réfrigérant entre le premier moyen échangeur de chaleur (10) et le condenseur principal (2).

8. Système de gestion thermique d'un véhicule selon l'une quelconque des revendications précédentes, incluant un évaporateur de réfrigérant (4) dans le trajet de l'écoulement d'air du conditionnement d'air du système.

9. Système de gestion thermique d'un véhicule selon la revendication 8 en combinaison avec la revendication 4 ou 5, dans lequel l'évaporateur de réfrigérant (4) se situe en aval du condenseur de réfrigérant (3) prévu sur le trajet de l'écoulement d'air du conditionnement d'air.

10. Système de gestion thermique d'un véhicule selon l'une quelconque des revendications précédentes, dans lequel le moyen échangeur de chaleur additionnel (11) est agencé pour transférer la chaleur entre le système d'émission de gaz d'échappement du véhicule et le système de circuit de réfrigérant.
